# EUROPEAN PATENT APPLICATION

(11) **EP 3 222 917 A1**
(43) Date of publication of application: **27.09.2017**
(21) Application number: 15862078.1
(22) Date of filing: 08.10.2015
(51) Int. Cl.: F23Q 7/00

(54) **METHOD FOR MANUFACTURING CERAMIC HEATER-TYPE GLOW PLUG, AND CERAMIC HEATER-TYPE GLOW PLUG**

(30) Priority: 21.11.2014 JP 2014236142
(71) Applicant: Bosch Corporation, Tokyo 150-8360 (JP)
(72) Inventor: TAKATSU, Katsumi, Saitama 355-8603 (JP)
(74) Representative: Bee, Joachim
(86) International application number: PCT/JP2015/078604
(87) International publication number: WO 2016/080106

(57) **Abstract**

A manufacturing process can be simplified, and manufacturing cost is reduced.

A method for manufacturing a ceramic heater-type glow plug (1) that includes: a ceramic heater (11); a metallic outer cylinder (12) that holds the ceramic heater at one end and has the other end inserted in and fixed to a metallic housing (14) ; and lead wire (13) that is connected to the ceramic heater and electrifies the ceramic heater, the method for manufacturing a ceramic heater-type glow plug includes the steps of: forming a metalized layer (116) in a region of the ceramic heater that is connected to the lead wire; press-inserting at least the metalized layer of the ceramic heater in a connection fitting (18) that connects the ceramic heater and the lead wire; and heating the ceramic heater and the connection fitting at a temperature at which a material for forming the metalized layer is brought into a semi-molten state and joining by mass transfer between the connection fitting and a solid layer of the metalized layer.

## Description

### Technical Field

The invention relates to a method for manufacturing a ceramic heater-type glow plug that is used to aid starting a diesel engine and to a ceramic heater-type glow plug.

### Background Art

A ceramic heater-type glow plug that is used to aid starting a diesel engine has been known. The ceramic heater-type glow plug includes: a ceramic heater with a heat generating section; and a metallic outer cylinder that holds one end side of the ceramic heater in a state where the heat generating section is projected to outside. In such a glow plug, one end side of the outer cylinder is inserted in and fixed to a housing as an attachment fitting to a cylinder head of the engine (for example, see PTL 1).

Lead wire that supplies a current to the ceramic heater is connected to said ceramic heater. The ceramic heater and the lead wire are connected by forming a projected section at one end of the ceramic heater and fitting and brazing an end portion of the lead wire, a tip of which is formed in a cup shape, to this projected section (for example, see PTL 2).

### Citation List

### Patent Literature

[PTL 1] Japanese Patent No. 4,555,508
[PTL 2] JP-A-2005-315447

### Summary of Invention

Technical Problem

However, when the ceramic heater and the lead wire are connected by using a brazing material, in order to improve wettability, such preprocessing that a plating layer is formed in advance on a base material of one of the ceramic heater and the lead wire is required, and this leads to a problem of an increased manufacturing workload. There is also a problem of increased manufacturing cost because the brazing material is a relatively expensive material.

The invention has been made in view of the above problems and therefore has a purpose of providing a method for manufacturing a ceramic heater-type glow plug that can simplify a manufacturing process and can reduce manufacturing cost, and the ceramic heater-type glow plug.

### Solution to Problem

In order to solve the above problems, the invention is a method for manufacturing a ceramic heater-type glow plug that includes: a ceramic heater; a metallic outer cylinder that holds the ceramic heater at one end and has the other end inserted in and fixed to a metallic housing; and lead wire that is connected to the ceramic heater and electrifies the ceramic heater. The method for manufacturing a ceramic heater-type glow plug is characterized by including the steps of: forming a metalized layer in a region of the ceramic heater that is connected to the lead wire; press-inserting at least the metalized layer of the ceramic heater in a connection fitting that connects the ceramic heater and the lead wire; and heating the ceramic heater and the connection fitting at a temperature at which a material for forming the metalized layer is brought into a semi-molten state so as to join by mass transfer between the connection fitting and a solid layer of the metalized layer.

The method for manufacturing a ceramic heater-type glow plug preferably has the steps of: forming a second metalized layer in at least a portion of a surface region of the ceramic heater that is held by the outer cylinder; press-inserting at least the second metalized layer of the ceramic heater in the outer cylinder; and heating the ceramic heater and the outer cylinder at a temperature at which a material for forming the second metalized layer is brought into a semi-molten state so as to join by the mass transfer between the outer cylinder and a solid layer of the second metalized layer.

The outer cylinder and the second metalized layer are preferably joined at the same time as joining of the connection fitting and the metalized layer.

After the metalized layer is press-inserted in the connection fitting, the second metalized layer is preferably press-inserted in the outer cylinder.

The metalized layer and the second metalized layer are each preferably formed of silver paste that contains copper of 30% or less and titanium of 10% or less of total weight of the corresponding metalized layer.

After the connection fitting and the metalized layer are joined and the outer cylinder and the second metalized layer are joined, the outer cylinder is preferably caulked to fix the lead wire to the outer cylinder.

A heat resistant resin is preferably provided on a surface of the lead wire that opposes a caulked portion of the outer cylinder.

The surface of the lead wire that opposes the caulked portion of the outer cylinder is preferably knurled.

The joining is preferably performed by heating in a vacuum or non-oxidizing atmosphere.

The invention is a ceramic heater-type glow plug that includes: a ceramic heater; a metallic outer cylinder that holds the ceramic heater at one end and has the other end inserted in and fixed to a metallic housing; and lead wire that is connected to the ceramic heater and electrifies the ceramic heater. The ceramic heater-type glow plug is characterized by including a connection fitting with electrical conductivity that connects the ceramic heater and the lead wire, in which the ceramic heater has a metalized layer in at least a portion of a surface region that is held by the connection fitting, and the ceramic heater and the connection fitting are joined by: press-inserting the metalized layer of the ceramic heater in the connection fitting; heating the ceramic heater and the connection fitting at a temperature at which a material for forming the metalized layer is brought into a semi-molten state; and mass transfer between the connection fitting and a solid layer of the metalized layer.

The ceramic heater preferably has a second metalized layer in at least a portion of a surface region that is held by the outer cylinder, and the ceramic heater and the outer cylinder are preferably joined by: press-inserting the second metalized layer of the ceramic heater in the outer cylinder; heating the ceramic heater and the outer cylinder at a temperature at which a material for forming the second metalized layer is brought into the semi-molten state; and the mass transfer between the outer cylinder and the solid layer of the second metalized layer.

The metalized layer and the second metalized layer are each preferably formed of silver paste that contains copper of 30% or less and titanium of 10% or less of total weight of the corresponding metalized layer.

The lead wire is preferably fixed to the outer cylinder by caulking of the outer cylinder.

A heat resistant resin is preferably provided on a surface of the lead wire that opposes a caulked portion of the outer cylinder.

The surface of the lead wire that opposes the caulked portion of the outer cylinder is preferably knurled.

### Advantageous Effects of Invention

According to the invention, a manufacturing process can be simplified, and manufacturing cost can be reduced.

### Brief Description of the Drawings

[Fig. 1] Fig. 1 is a vertical cross-sectional view of a ceramic heater-type glow plug according to a first embodiment of the invention.
[Fig. 2] Fig. 2 is a vertical cross-sectional view in which a portion near a ceramic heater assembly is enlarged in Fig. 1.
[Fig. 3] Fig. 3 includes views for illustrating a method for manufacturing the ceramic heater-type glow plug according to the first embodiment of the invention.
[Fig. 4] Fig. 4 includes views for illustrating the method for manufacturing the ceramic heater-type glow plug according to the first embodiment of the invention.
[Fig. 5] Fig. 5 is a vertical cross-sectional view in which a portion near a ceramic heater assembly of a ceramic heater-type glow plug according to a second embodiment of the invention is enlarged.

### Description of Embodiments

A description will hereinafter be made on a preferred embodiment of the invention with reference to the drawings. Note that the embodiment described below is merely one example and various embodiments can be made within the scope of the invention.

### [First Embodiment]

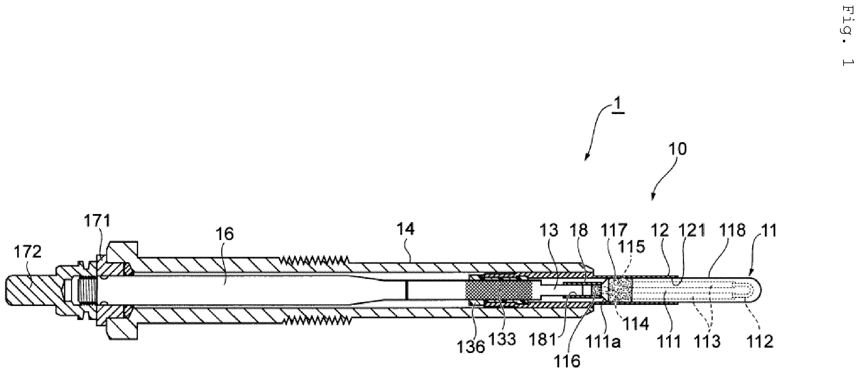

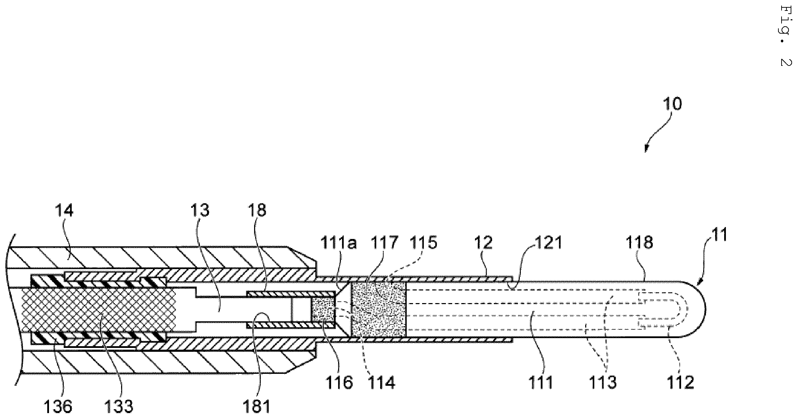

Fig. 1 is a vertical cross-sectional view of a ceramic heater-type glow plug 1 for a diesel engine according to a first embodiment of the invention. Fig. 2 is a vertical cross-sectional view of the ceramic heater-type glow plug in which a portion near a ceramic assembly is enlarged in Fig. 1. As depicted in Fig. 1, Fig. 2, the glow plug 1 includes a ceramic heater assembly 10, a housing 14, a lead rod 16, and the like. Note that a transverse section used below means a cut plane that is perpendicular to a longitudinal axis of the ceramic heater-type glow plug 1. In addition, a vertical cross section used below means a cut plane that includes the longitudinal axis of the ceramic heater-type glow plug 1.

### <Configuration of Ceramic Heater-Type Glow Plug>

### (Ceramic Heater-Type Assembly)

The ceramic heater assembly 10 includes a ceramic heater 11, a metallic outer cylinder (sheath) 12, a large-diameter lead section 13, a connection fitting 18, and the like.

The ceramic heater 11 is a portion that is heated by electrification. In the ceramic heater 11, a ceramic heat generating body 112 that is formed in a U shape is embedded in a ceramic insulation substrate 111 that constitutes a main body section. On both end sides of this ceramic heat generating body 112, a positive electrode 114 and a negative electrode 115 are provided via metal leads 113.

The positive electrode 114 is exposed onto an outer surface of the ceramic insulation substrate 111 on a rear end side thereof that is opposite from a tip side where the ceramic heat generating body 112 is embedded. Here, the metal lead 113 is projected from a rear end of the ceramic insulation substrate 111, and this portion serves as the positive electrode 114. A chamfered section 111a is formed on a rear end surface of the ceramic insulation substrate 111.

Note that, due to formation of the chamfered section 111a, a distance between the ceramic insulation substrate 111 and the outer cylinder 12 can be increased around a joined portion between the ceramic insulation substrate 111 and the large-diameter lead section 13. Accordingly, an insulation property can be enhanced between the ceramic insulation substrate 111 and the outer cylinder 12 when joining, which can reduce a chance of insulation breakdown.

A positive electrode side metalized section 116 as a metalized layer is formed on a surface of the metal lead 113 that includes the positive electrode 114. The positive electrode side metalized section 116 is, for example, formed of silver paste that contains copper (Cu) of 30% by weight or less and titanium (Ti) of 10% by weight or less of total weight of the positive electrode side metalized section 116.

In the ceramic heater 11, the positive electrode side metalized section 116 is joined to an inner surface at a tip side of the connection fitting 18, and the positive electrode 114 is electrically connected to the connection fitting 18. The connection fitting 18 is a cylindrical fitting that is formed of metal with electrical conductivity, the tip side thereof is electrically connected to the positive electrode 114, and a rear end side thereof is electrically connected to the large-diameter lead section 13.

The connection fitting 18 is formed such that an inner diameter thereof is in size to allow press-insertion of the positive electrode side metalized section 116 of the ceramic heater 11, and is also formed such that a large clearance is hardly generated between an inner circumferential surface 181 of the connection fitting 18 and a surface of the positive electrode side metalized section 116 when the positive electrode side metalized section 116 is press-inserted in the connection fitting 18.

More specifically, the positive electrode side metalized section 116 of the ceramic heater 11 and the connection fitting 18 are joined by heating the ceramic heater 11 and the connection fitting 18 at a temperature at which the material for forming the positive electrode side metalized section 116 is brought into a semi-molten state in a state where the positive electrode side metalized section 116 of the ceramic heater 11 is press-inserted in and fixed to the connection fitting 18 and by mass transfer between the connection fitting 18 and a solid layer of the positive electrode side metalized section 116.

The negative electrode 115 is exposed onto an outer circumferential surface of the ceramic insulation substrate 111, and a negative electrode side metalized section 117 as a second metalized layer is formed on the outer circumferential surface of the ceramic insulation substrate 111 that includes the negative electrode 115.

The negative electrode side metalized section 117 is, for example, formed of silver paste that contains copper (Cu) of 30% by weight or less and titanium (Ti) of 10% by weight or less of total weight of the negative electrode side metalized section 117.

The negative electrode side metalized section 117 of the ceramic heater 11 is joined to an inner surface at a tip side of the outer cylinder 12, and the negative electrode 115 is electrically connected to the outer cylinder 12. The outer cylinder 12 is formed of a metal material with electrical conductivity, for example, stainless steel (SUS430). The outer cylinder 12 has an outer circumferential surface in a stepped cylindrical shape that can be formed by deep drawing. Here, a reason why the outer cylinder 12 is in the shape that can be formed by deep drawing is to reduce manufacturing cost. The outer cylinder 12 is formed such that an inner diameter thereof is in size to allow press-insertion of the ceramic heater 11, and is also formed such that a large clearance is hardly generated between an inner circumferential surface 121 of the outer cylinder 12 and an outer circumferential surface 118 of the ceramic heater 11 when the ceramic heater 11 is press-inserted in the outer cylinder 12.

More specifically, the ceramic heater 11 and the outer cylinder 12 are joined by heating the ceramic heater 11 and the outer cylinder 12 at a temperature at which the material for forming the negative electrode side metalized section 117 is brought into a semi-molten state in a state where the negative electrode side metalized section 117 of the ceramic heater 11 is press-inserted in and fixed to the outer cylinder 12 and by mass transfer between the outer cylinder 12 and a solid layer of the negative electrode side metalized section 117.

During actuation of the glow plug 1, a large current (for example, 4 to 30 amperes) at a high temperature flows through the large-diameter lead section 13. Accordingly, in the case where a diameter of the large-diameter lead section 13 is excessively small, such as being less than 1 mm, in combination with self-generating heat, the large-diameter lead section 13 is possibly oxidized in a short time. To avoid this problem, the large-diameter lead section 13 is formed as a lead rod (lead wire for electrifying the ceramic heater) with a relatively large diameter, for example, having a transverse sectional area that is 20% or more of a transverse sectional area of the ceramic insulation substrate 111.

On the contrary, in the case where the diameter of the large-diameter lead section 13 is excessively large, a sufficient distance cannot be secured between the large-diameter lead section 13 and the outer cylinder 12, which possibly leads to the insulation breakdown. Thus, the transverse sectional area of the large-diameter lead section 13 is preferably 40% or less of the transverse sectional area of the ceramic insulation substrate 111, for example. In addition, the large-diameter lead section 13 is preferably at least twice as long as the diameter of the large-diameter lead section 13.

The large-diameter lead section 13 is formed of a material with lower rigidity and higher electrical conductivity than the lead rod 16 (the lead wire for electrifying the ceramic heater) that functions as an external connection terminal. As such a material, copper (Cu), aluminum (Al), or alloys of those can be raised, for example. Alternatively, an iron alloy or cast iron with the low rigidity and the high electrical conductivity can also be used.

A tip portion of the large-diameter lead section 13 is press-inserted in and fixed to the rear end side of the connection fitting 18. The tip portion of the large-diameter lead section 13 and a rear end portion of the ceramic heater 11 are each press-inserted in the connection fitting 18 while a specified clearance is defined therebetween in the connection fitting 18.

Here, a surface of the large-diameter lead section 13 may be nickel (Ni)-plated or the like in order to improve a heat resistance property.

An entire circumferential surface in an axially central portion of the large-diameter lead section 13 is knurled, and a heat resistant resin 136 is filled in between this knurled section 133 and the outer cylinder 12. Here, as the heat resistant resin 136, a polyphenylene sulfide (PPS) resin, a polyether ether ketone (PEEK) resin, or the like is preferably used.

The heat resistant resin 136 is caulked with the outer cylinder 12, and a diameter of a caulked portion of the outer cylinder 12 is reduced when compared to rest thereof. By caulking the outer cylinder 12, the outer cylinder 12 and the heat resistant resin 136 are pressed against the knurled section 133 of the large-diameter lead section 13, and the large-diameter lead section 13 can thereby be fixed to the outer cylinder 12. That is, the surface of the large-diameter lead section 13 that opposes the caulked portion of the outer cylinder 12 is formed with the knurled section 133 and provided with the heat resistant resin 136.

### (Housing)

The housing 14 is an attachment fitting to a cylinder head of the engine, which is not depicted, and houses the outer cylinder 12 and the large-diameter lead section 13. The housing 14 is formed of a metal material, for example, carbon steel (S45C) . The housing 14 is formed in a cylindrical shape, and the ceramic heater assembly 10, which is configured as described above, is joined and fixed thereto by laser welding, for example. More specifically, a rear end side of the outer cylinder 12 is inserted in and fixed to the housing 14 by laser welding.

### (Lead Rod)

The lead rod 16 is housed in the housing 14 and joined to a rear end portion of the large-diameter lead section 13 by welding.

The lead rod 16 is held by an insulator 171 on a rear end side of the housing 14, and a rear end portion thereof is exposed to outside of the housing 14 and connected to a round pin 172.

That is, a tip side of the lead rod 16 is held by and fixed to the outer cylinder 12 via the large-diameter lead section 13 by caulking, and a rear end side thereof is held by and fixed to the insulator 171.

### <Method for Manufacturing Ceramic Heater-Type Glow Plug>

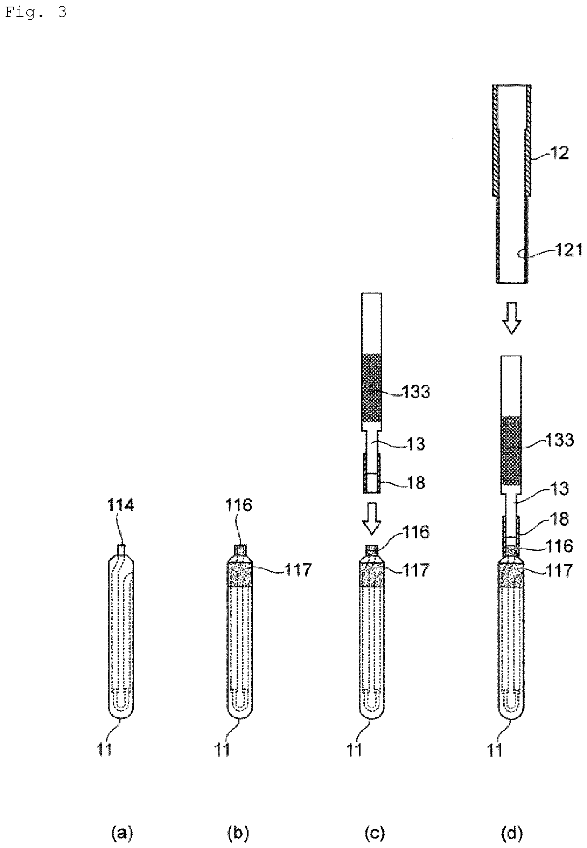

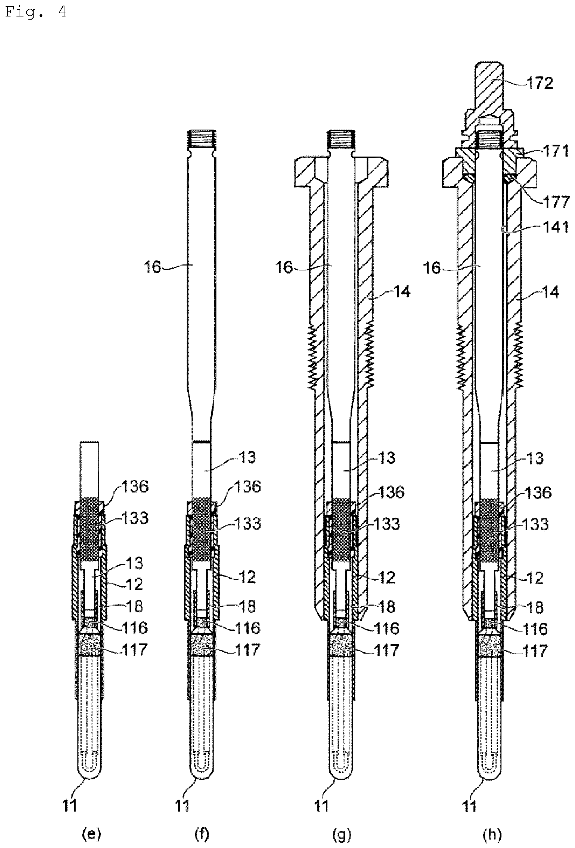

Based on Fig. 3, Fig. 4, a method for manufacturing the ceramic heater type glow plug 1 will be described.

Fig. 3 and Fig. 4 each include views for illustrating the method for manufacturing the ceramic heater-type glow plug according to the embodiment of the invention.

As depicted in Fig. 3 (a), the ceramic heater 11, in which the ceramic heat generating body 112 and the metal lead 113 are embedded in the ceramic insulation substrate 111, is prepared.

Next, as depicted in Fig. 3(b), the positive electrode side metalized section 116 is formed on an outer circumferential surface of the metal lead 113, which includes the positive electrode 114 provided at the rear end side of the ceramic heater 11, and the negative electrode side metalized section 117 is formed on the outer circumferential surface, which includes the negative electrode 115 provided near the positive electrode 114.

Next, as depicted in Fig. 3(c), the tip portion of the large-diameter lead section 13, which is knurled, is press-inserted in and fixed to the connection fitting 18 from the rear end side of the connection fitting 18, and the positive electrode side metalized section 116 of the ceramic heater 11 is press-inserted in the connection fitting 18 from the tip side of the connection fitting 18. During the press-insertion, as depicted in Fig. 3(d), the ceramic heater 11 is press-inserted in the connection fitting 18 to a position where at least an entire region of the positive electrode side metalized section 116, which is formed in the ceramic heater 11, is housed in the connection fitting 18.

Next, as depicted in Fig. 3(d), the ceramic heater 11, the connection fitting 18, and the large-diameter lead rod 13 are press-inserted in an inner hole 121 of the outer cylinder 12 from the tip side of the outer cylinder 12. During the press-insertion, as depicted in Fig. 4 (e), the ceramic heater 11 is press-inserted in the outer cylinder 12 to a position where at least an entire region of the negative electrode side metalized section 117, which is formed in the ceramic heater 11, is housed in the outer cylinder 12.

Next, as depicted in Fig. 4 (e), the heat resistant resin 136 is filled in between the knurled section 133 of the large-diameter lead section 13 and the inner circumferential surface of the outer cylinder 12.

Thereafter, in a state where the outer cylinder 12, the ceramic heater 11, the large-diameter lead section 13, and the connection fitting 18 are temporarily assembled, this assembly is heated to 800 to 900 °C under a vacuum environment or an environment of a non-oxidizing atmosphere. Here, the temperature of 800 to 900 °C is a temperature at which the silver paste, which forms each of the positive electrode side metalized section 116 and the negative electrode side metalized section 117, is brought into the semi-molten state. Accordingly, the positive electrode side metalized section 116 is brought into the semi-molten state by heating, which causes joining by the mass transfer between the inner circumferential surface 181 of the connection fitting 18 and the solid layer of the negative electrode side metalized section 116. In this way, the connection fitting 18 and the ceramic heater 11 are joined. In addition, at the same time as this, the negative electrode side metalized section 117 is also brought into the semi-molten state, which causes joining by the mass transfer between the inner circumferential surface 121 of the outer cylinder 12 and the solid layer of the negative electrode side metalized section 117. In this way, the outer cylinder 12 and the ceramic heater 11 are joined, and the ceramic heater 11 is fixed to the outer cylinder 12.

Next, as depicted in Fig. 4(f), the outer cylinder 12 is caulked so as to fix the large-diameter lead section 13 to the outer cylinder 12. In addition, the lead rod 16 and the large-diameter lead section 13 are joined and fixed by welding (for example, spot welding).

Next, as depicted in Fig. 4(g), the lead rod 16, the large-diameter lead section 13, the outer cylinder 12, and the ceramic heater 11 are sequentially inserted from a tip side of the housing 14, and the outer cylinder 12 is inserted in the housing 14.

Thereafter, the housing 14 and the outer cylinder 12 are joined by laser welding. In this way, the housing 14 and the outer cylinder 12 are integrally joined, and the outer cylinder 12 can thereby be fixed to the housing 14.

Finally, as depicted in Fig. 4 (h), a rear end of an inner hole 141 of the housing 14 is sealed by the insulator 171, and the round pin 172 is connected to the rear end portion of the lead rod 16. At this time, an O-ring 177 is provided between the insulator 171 and the housing 14.

By the processes described so far, the ceramic heater-type glow plug 1 is completed.

### <Effects>

According to the above-described configuration, the positive electrode side metalized section 116 of the ceramic heater 11 is press-inserted in the connection fitting 18, and the ceramic heater 11 and the connection fitting 18 are heated at the temperature, at which the silver paste for forming the positive electrode side metalized section 116 is brought into the semi-molten state, so as to be joined by the mass transfer between the connection fitting 18 and the solid layer of the positive electrode side metalized section 116. Accordingly, an expensive brazing material does not have to be placed on the positive electrode side metalized section 116 when the ceramic heater 11 and the connection fitting 18 are joined. In this way, it is no longer required to form a plating layer in advance on the connection fitting 18 for a purpose of improved wettability of the brazing material. Thus, compared to joining using the brazing material, a manufacturing process can be simplified. In addition, because the brazing material is not used for joining, manufacturing cost can be reduced.

The negative electrode side metalized section 117 of the ceramic heater 11 is press-inserted in the outer cylinder 12, and the ceramic heater 11 and the outer cylinder 12 are heated at the temperature, at which the silver paste for forming the negative electrode side metalized section 117 is brought into the semi-molten state, so as to be joined by the mass transfer between the outer cylinder 12 and the solid layer of the negative electrode side metalized section 117. Accordingly, the expensive brazing material does not have to be placed on the inside of the outer cylinder 12 when the ceramic heater 11 and the outer cylinder 12 are joined. In this way, it is no longer required to form the plating layer in advance on the outer cylinder 12 for the purpose of the improved wettability of the brazing material. Thus, compared to joining using the brazing material, the manufacturing process can be simplified. In addition, because the brazing material is not used for joining, the manufacturing cost can be reduced.

Just as described, the brazing material does not have to be used for the positive electrode side metalized section 116 and the negative electrode side metalized section 117. Therefore, effects of simplifying the manufacturing process and reducing the manufacturing cost can further be enhanced.

The negative electrode side metalized section 117 and the outer cylinder 12 are joined at the same time as joining of the positive electrode side metalized section 116 and the connection fitting 18. Accordingly, the metalized sections 116, 117 are heated at once. Therefore, the manufacturing process can be simplified.

In addition, after the positive electrode side metalized section 116 is press-inserted in the connection fitting 18, the negative electrode side metalized section 117 is press-inserted in the outer cylinder 12. Thus, the ceramic heater 11 can sequentially be assembled from inside thereof. Therefore, work efficiency is improved.

The outer cylinder 12 can be fixed to the large-diameter lead section 13 by caulking of the outer cylinder 12. Thus, there is no need to fix the large-diameter lead section 13 by filling a filler in between the large-diameter lead section 13 and the outer cylinder 12, or the like. In addition, because the large-diameter lead section 13 can be fixed to the outer cylinder 12 by a single task of caulking, this process can easily be performed in a short time.

The positive electrode side metalized section 116 of the ceramic heater 11 is connected to the lead rod 16 by using the large-diameter lead section 13. Thus, resistance of the large-diameter lead section 13 can be reduced, and a configuration thereof can be simplified. In addition, even when the large current at the high temperature flows therethrough, the self-generating heat can be suppressed. Thus, it is possible to prevent a temperature of the large-diameter lead section 13 from reaching an upper temperature limit thereof or higher. Therefore, deterioration of the large-diameter lead section 13 due to oxidation can be prevented for a long period. Furthermore, by using the large-diameter lead section 13, modes of the other components can also be simplified, and thus a manufacturing process can also be simplified.

Because the large-diameter lead section 13 has the lower rigidity than the lead rod 16, the large-diameter lead section 13 is likely to be deflected. In this way, stress concentration on a joined portion between the large-diameter lead section 13 and the positive electrode side metalized section 116 of the ceramic heater 11 can be alleviated. More specifically, even in the case where bending stress is generated in said joined portion due to vibrations during driving of the engine or stress that is applied to a periphery of each of the joined portions during the assembly of the glow plug 1, the large-diameter lead section 13 is deflected, and thus concentration of the bending stress on said joined portion can be avoided.

### [Second Embodiment]

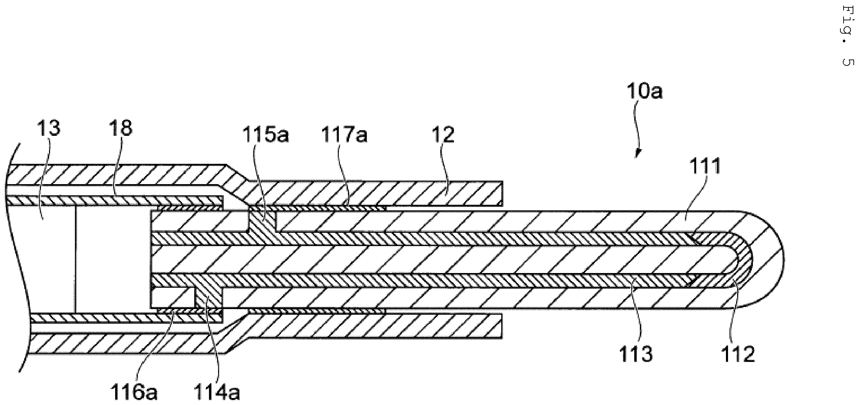

Fig. 5 is a vertical cross-sectional view in which a portion near a ceramic heater assembly of a ceramic heater-type glow plug according to a second embodiment of the invention is enlarged. Noted that, in Fig. 5, the same configuration as that of the first embodiment is denoted by the same reference numerals and the description thereon will not be made.

In a ceramic heater assembly 10a depicted in Fig. 5, a positive electrode 114a and a negative electrode 115a are each exposed onto the outer circumferential surface (a lateral circumferential surface) of the ceramic insulation substrate 111 from the metal lead 113, which is embedded in the ceramic insulation substrate 111. A positive electrode side metalized section 116a is formed in a region that includes the positive electrode 114a, and is joined to the connection fitting 18. A negative electrode side metalized section 117a is formed in a region that includes the negative electrode 115a, and is joined to the outer cylinder 12. Here, the outer cylinder 12 is formed with a step, and the connection fitting 18 is housed in a portion thereof with the increased diameter.

With such a configuration, an outer diameter of the ceramic heater 11 can be equalized.

The ceramic heater-type glow plug that has been described so far merely illustrates one aspect of the invention, and thus does not limit the invention. Each of the embodiments can arbitrarily be changed within the scope of the invention.

For example, in the first embodiment, the positive electrode side metalized section is formed on the surface of the metal lead, which is projected from the rear end of the ceramic insulation substrate. However, a projected section may be formed in the ceramic insulation substrate itself, the metal lead may be exposed onto an end surface thereof, and the positive electrode side metalized section may be formed on a surface of said projected section.

## Claims

1. A method for manufacturing a ceramic heater-type glow plug that includes: a ceramic heater; a metallic outer cylinder that holds the ceramic heater at one end and has the other end inserted in and fixed to a metallic housing; and lead wire that is connected to the ceramic heater and electrifies the ceramic heater, the method for manufacturing a ceramic heater-type glow plug **characterized by** comprising the steps of:
forming a metalized layer in a region of the ceramic heater that is connected to the lead wire;
press-inserting at least the metalized layer of the ceramic heater in a connection fitting that connects the ceramic heater and the lead wire; and
heating the ceramic heater and the connection fitting at a temperature at which a material for forming the metalized layer is brought into a semi-molten state and joining by mass transfer between the connection fitting and a solid layer of the metalized layer.

2. The method for manufacturing a ceramic heater-type glow plug according to claim 1 **characterized by** further comprising the steps of:
forming a second metalized layer in at least a portion of a surface region of the ceramic heater that is held by the outer cylinder;
press-inserting at least the second metalized layer of the ceramic heater in the outer cylinder; and
heating the ceramic heater and the outer cylinder at a temperature at which a material for forming the second metalized layer is brought into a semi-molten state and joining by mass transfer between the outer cylinder and a solid layer of the second metalized layer.

3. The method for manufacturing a ceramic heater-type glow plug according to claim 2 **characterized in that**
the outer cylinder and the second metalized layer are joined at the same time as joining of the connection fitting and the metalized layer.

4. The method for manufacturing a ceramic heater-type glow plug according to claim 2 or 3 **characterized in that**
after the metalized layer is press-inserted in the connection fitting, the second metalized layer is press-inserted in the outer cylinder.

5. The method for manufacturing a ceramic heater-type glow plug according to any one of claims 2 to 4 **characterized in that**
the metalized layer and the second metalized layer are each formed of silver paste that contains copper of 30% or less and titanium of 10% or less of total weight of the corresponding metalized layer.

6. The method for manufacturing a ceramic heater-type glow plug according to any one of claims 2 to 5 **characterized in that**
after the connection fitting and the metalized layer are joined and the outer cylinder and the second metalized layer are joined, the outer cylinder is caulked to fix the lead wire to the outer cylinder.

7. The method for manufacturing a ceramic heater-type glow plug according to claim 6 **characterized in that**
a heat resistant resin is provided on a surface of the lead wire that opposes a caulked portion of the outer cylinder.

8. The method for manufacturing a ceramic heater-type glow plug according to claim 6 or 7 **characterized in that**
the surface of the lead wire that opposes the caulked portion of the outer cylinder is knurled.

9. The method for manufacturing a ceramic heater-type glow plug according to any one of claims 1 to 8 **characterized in that**
the joining is performed by heating in a vacuum or non-oxidizing atmosphere.

10. A ceramic heater-type glow plug that includes: a ceramic heater; a metallic outer cylinder that holds the ceramic heater at one end and has the other end inserted in and fixed to a metallic housing; and lead wire that is connected to the ceramic heater and electrifies the ceramic heater, the ceramic heater-type glow plug **characterized by** comprising:
a connection fitting with electrical conductivity that connects the ceramic heater and the lead wire, in which the ceramic heater has a metalized layer in at least a portion of a surface region that is held by the connection fitting, and
the ceramic heater and the connection fitting are joined by: press-inserting the metalized layer of the ceramic heater in the connection fitting; heating the ceramic heater and the connection fitting at a temperature at which a material for forming the metalized layer is brought into a semi-molten state; and mass transfer between the connection fitting and a solid layer of the metalized layer.

11. The ceramic heater-type glow plug according to claim 10 **characterized in that**
the ceramic heater has a second metalized layer in at least a portion of a surface region that is held by the outer cylinder, and
the ceramic heater and the outer cylinder are joined by: press-inserting the second metalized layer of the ceramic heater in the outer cylinder; heating the ceramic heater and the outer cylinder at a temperature at which a material for forming the second metalized layer is brought into a semi-molten state; and mass transfer between the outer cylinder and a solid layer of the second metalized layer.

12. The ceramic heater-type glow plug according to claim 11 **characterized in that**
the metalized layer and the second metalized layer are each formed of silver paste that contains copper of 30% or less and titanium of 10% or less of total weight of the corresponding metalized layer.

13. The ceramic heater-type glow plug according to any one of claims 10 to 12 **characterized in that**
the lead wire is fixed to the outer cylinder by caulking of the outer cylinder.

14. The ceramic heater-type glow plug according to claim 13 **characterized in that**
a heat resistant resin is provided on a surface of the lead wire that opposes a caulked portion of the outer cylinder.

15. The ceramic heater-type glow plug according to claim 13 or 14 **characterized in that**
the surface of the lead wire that opposes the caulked portion of the outer cylinder is knurled.
